# EUROPÄISCHE PATENTANMELDUNG

(11) **EP 3 296 611 A1**
(43) Veröffentlichungstag der Anmeldung: **21.03.2018**
(21) Anmeldenummer: 17001215.7
(22) Anmeldetag: 17.07.2017
(51) Int. Cl.: F16P 3/08, B23Q 11/08

(54) **SICHERHEITSTÜR FÜR DIE VORFORMSEITE EINER BEHÄLTERGLASMASCHINENSTATION**

(30) Priorität: 20.09.2016 DE 202016005747 U
(71) Anmelder: Rolf Themann & Partner SA, 1273 Luxembourg (LU)
(72) Erfinder: Novák, Liber, 471 24 MIMON (CZ); Cihlár, Jan, 294 11 BREZINA (CZ); Zalský, Stepán, 51301 Semily (CZ)
(74) Vertreter: Lelgemann, Karl-Heinz

(57) **Zusammenfassung**

Eine Sicherheitstür (5) für die Vorformseite einer Behälterglasmaschinenstation hat ein Türblatt (6), mittels dem im geschlossenen Zustand der Sicherheitstür (5) die Vorformseite der Behälterglasmaschinenstation gesichert ist.

Um eine derartige Sicherheitstür (5) zur Verfügung zu stellen, mittels der das Maschinenbedienungspersonal besser vor aus der Vorformseite der Behälterglasmaschinenstation herausfallenden Teilen schützbar ist, bei der Eingriffe in die Vorformseite bei laufender Behälterglasmaschinenstation sicher unterbunden werden und bei der ein Zugriff zur Vorformseite der Behälterglasmaschinenstation nur dann möglich ist, wenn keine Unfallgefahr für das Maschinenbedienungspersonal besteht, wird vorgeschlagen, dass das Türblatt (6) der Sicherheitstür (5) zweiteilig mit einem Oberabschnitt (8) und einem Unterabschnitt (7) ausgebildet ist und eine Schwenkachse (9) aufweist, die zwischen dem Unterabschnitt (7) und dem Oberabschnitt (8) des Türblatts (6) angeordnet ist und um die der Oberabschnitt (8) zum Öffnen und Schließen der Sicherheitstür (5) aus einer vertikalen in eine horizontale bzw. aus einer horizontalen in eine vertikale Stellung schwenkbar ist.

## Beschreibung

Die Erfindung bezieht sich auf eine Sicherheitstür für die Vorformseite einer Behälterglasmaschinenstation, mit einem Türblatt, mittels dem in geschlossener Stellung der Sicherheitstür die Vorformseite der Behälterglasmaschinenstation gesichert ist.

Entsprechende Sicherheits- bzw. Schutztüren sind üblicherweise an der Vorformseite von Behälterglasmaschinenstationen angeordnet, um das Bedienungspersonal zu schützen und um Zugriffe zur Vorformseite beim laufenden Betrieb der Behälterglasmaschinenstation zu unterbinden.

Sofern derartige Schutz- bzw. Sicherheitstüren nicht installiert sind, ist es bekannt, gewöhnliche Abdeckungen zu verwenden, die lediglich dazu dienen, die Vorformen der Behälterglasmaschinenstation sowie bewegliche Teile derselben abzudecken. Hierdurch wird jedoch kein Schutz gegen herausfallende Teile od.dgl. geboten; darüber hinaus kann das Maschinenbedienungspersonal ungehindert auf die Vorformseite der Behälterglasmaschinenstation zugreifen, ohne dass irgendwelche Schutzmaßnahmen realisiert wären. Zwar ist es üblicherweise untersagt, im Betrieb der Behälterglasmaschinenstation, d.h. wenn Glastropfen in die Vorformen fallen, die Vorformen zu schmieren oder andere Wartungsmaßnahmen vorzunehmen, jedoch wird diesem Verbot immer wieder zuwider gehandelt, so dass hierdurch bedingt Unfälle, Verbrennungen und Verletzungen auftreten.

Bekannt aus dem Stand der Technik sind vertikale Schiebetüren, die als Sicherheits- bzw. Schutztüren eingesetzt werden, die in Vertikalrichtung auf- und abwärts bewegbar sind. Durch diese Schiebetüren kann das Maschinenbedienungspersonal geschützt werden. Jedoch können diese vertikal beweglichen Schiebetüren nicht schnell ausgewechselt oder demontiert werden. Darüber hinaus benötigen sie erheblich mehr Bauraum als die vorher erwähnten Abdeckungen. Hierdurch werden die Zugriffsmöglichkeiten auf die Vorformen bei nicht in Betrieb befindlicher Behälterglasmaschinenstation eingeschränkt, da der Abstand zu den Vorformen erhöht wird. Dies wirkt sich für das Maschinenbedienungspersonal ergonomisch nachteilig aus. Auch bei Wartungs- und Reparaturmaßnahmen an den Vorformen oder damit zusammenhängenden Maschinenteilen werden Rückenbelastungen etc. aufgrund des vergrößerten Abstands zu den Vorformen erhöht.

Ausgehend von dem vorstehend geschilderten Stand der Technik liegt der Erfindung die Aufgabe zugrunde, eine Sicherheitstür für die Vorformseite einer Behälterglasmaschinenstation zur Verfügung zu stellen, mittels der das Maschinenbedienungspersonal besser vor aus der Vorformseite der Behälterglasmaschinenstation herausfallenden Teilen schützbar ist, bei der Eingriffe in die Vorformseite bei laufender Behälterglasmaschinenstation sicher unterbunden werden und bei der ein Zugriff zur Vorformseite der Behälterglasmaschinenstation nur dann möglich ist, wenn keine Unfallgefahr für das Maschinenbedienungspersonal besteht.

Diese Aufgabe wird erfindungsgemäß dadurch gelöst, dass das Türblatt der Sicherheitstür zweiteilig mit einem Oberabschnitt und einem Unterabschnitt ausgebildet ist und eine Schwenkachse aufweist, die zwischen dem Unterabschnitt und dem Oberabschnitt des Türblatts angeordnet ist und um die der Oberabschnitt zum Öffnen und Schließen der Sicherheitstür aus einer vertikalen in eine horizontale bzw. aus einer horizontalen in eine vertikale Stellung schwenkbar ist. Hierdurch können praktisch sämtliche Irregularitäten und Unfälle an laufenden Behälterglasmaschinenstationen auf deren Vorformseite vermieden werden, wodurch maßgeblich zur Sicherheit im Betrieb derartiger Behälterglasmaschinen beigetragen wird.

Die Schwenkachse der Sicherheitstür wird durch Scharniere gebildet, mittels denen der Oberabschnitt des Türblatts schwenkbar am Unterabschnitt desselben gelagert ist. Der Unterabschnitt des Türblatts seinerseits ist im montierten bzw. eingebauten Zustand der Sicherheitstür fixiert in Bezug auf die Behälterglasmaschinenstation angeordnet. Die erfindungsgemäße Sicherheitstür funktioniert einerseits wie eine Abdeckung, ist andererseits aber auch beweglich und kann auf- und zugefahren werden. Sie schützt das Maschinenbedienungspersonal vor aus der Behälterglasmaschinenstation herausfallenden Teilen und sie verhindert, dass bei laufender Behälterglasmaschinenstation Zugriff auf deren Vorformseite genommen wird. Unfälle und insbesondere auch Verbrennungen, für die heiße Glastropfen üblicherweise ursächlich sind, können so sicher vermieden werden. Wartungsmaßnahmen, wie das Schmieren der Vorformen od.dgl., können durchgeführt werden, wenn die Behälterglasmaschinenstation außer Betrieb gesetzt ist und dann der Oberabschnitt des Türblatts der Sicherheitstür aus seiner vertikalen in seine horizontale Stellung verschwenkt wird. Nach Beendigung der Wartungsarbeiten kann der Betrieb der betreffenden Behälterglasmaschinenstation wieder aufgenommen werden, wenn der Oberabschnitt des Türblatts so verstellt worden ist, dass sich die Sicherheitstür in ihrer geschlossenen Stellung befindet. Dies kann beispielswiese durch ein nochmaliges Drücken auf einen entsprechenden Schaltknopf an einem Vorformbalken erfolgen, wodurch einer Steuervorrichtung der Behälterglasmaschine signalisiert wird, dass wieder Glastropfen in die betreffende Behälterglasmaschinenstation geliefert werden können, wobei mittels der Sicherheitstür der direkte Zugang zur Vorformseite dieser Behälterglasmaschinenstation verschlossen ist.

Eine einfache und zuverlässige Verschwenkung des Oberabschnitts des Türblatts der Sicherheitstür ist erreichbar, wenn die Sicherheitstür einen Fluidzylinder, insbesondere einen Pneumatikzylinder aufweist, der an einer Innenseite der Sicherheitstür integriert ist und mittels dem der Oberabschnitt des Türblatts der Sicherheitstür aus seiner vertikalen in seine horizontale Stellung und umgekehrt verstellbar ist. Die Betriebsweise des Fluid- bzw. Pneumatikzylinders kann ohne großen technisch-konstruktiven Aufwand so eingestellt bzw. festgelegt werden, dass durch ein Betätigung des Fluid- bzw. Pneumatikzylinders jeweils eine Verschwenkung des Oberabschnitts des Türblatts um 90 Grad in aufwärtiger oder abwärtiger Richtung erfolgt.

Gemäß einer zweckmäßigen Weiterbildung der erfindungsgemäßen Sicherheitstür ist die Schwenkachse, um die der Oberabschnitt des Türblatts in Bezug auf dessen Unterabschnitt verschwenkbar ist, rechtwinklig zur Vorformachse der Behälterglasmaschinenstation angeordnet.

Um sicherzustellen, dass die Sicherheitstür nur dann in ihren geöffneten Zustand verbracht werden kann, wenn durch einen entsprechenden Stellvorgang am Überkopfbalken der Behälterglasmaschinenstation letztere außer Betrieb gesetzt ist und keine Glastropfen mehr den Vorformen dieser Behälterglasmaschinenstation zugeführt werden, ist es vorteilhaft, wenn der Fluidzylinder eine Steuereinheit aufweist, die an eine Steuervorrichtung der Behälterglasmaschinenstation angeschlossen ist und eine Verstellung des Oberabschnitts des Türblatts in die Offenstellung der Sicherheitstür nur durchführt, wenn die Vorformseite der Behälterglasmaschinenstation außer Betrieb ist. Hierbei werden vorteilhaft die dem Fluidzylinder zugeordneten Ventile durch die Steuervorrichtung der Behälterglasmaschine entsprechend überwacht.

Um einen langfristigen Stillstand der Behälterglasmaschinenstation bei einem Druckfluidausfall oder Druckabfall zu vermeiden, ist es vorteilhaft, wenn der mittels der Steuereinheit verriegelte Fluidzylinder der Sicherheitstür manuell entriegelbar ist.

Falls die Sicherheitstür in eine übliche Vorformabdeckung integriert bzw. Bestandteil derselben ist, ist die erfindungsgemäße Sicherheitstür vollständig in die Vorformseite der Behälterglasmaschinenstation integriert. Ihre Abmessungen entsprechen denjenigen einer Standardabdeckung der Vorformseite. Ein zusätzlicher Raumbedarf besteht nicht.

Bei Umbauten an der Vorformseite der Behälterglasmaschinenstation ist es vorteilhaft, wenn die erfindungsgemäße Sicherheitstür mittels eines speziellen Schlüssels schnell, z.B. innerhalb von einigen Sekunden, entriegel- und demontierbar ist. Dann kann die vorformseitig platzierte Sicherheitstür mit wenigen Handgriffen und dem speziellen Schlüssel bzw. Sicherheitsschlüssel völlig demontiert werden, womit die Vorformseite insgesamt freigegeben wird. Somit können auch Formenhalter etc. gewechselt und andere größere Reparaturen an der Vorformseite der Behälterglasmaschinenstation vorgenommen werden. Die Sicherheitstür kann also auch als Quick Change- oder LOTO(Lock out Take Out)-Tür ausgestaltet sein.

Um die erfindungsgemäße Sicherheitstür, die je nach Ausführung zwischen zwölf und fünfzehn Kilogramm wiegt, nach einer Demontage in einfacher Weise abtransportieren zu können, ist es vorteilhaft, wenn diese zwei Handgriffe aufweist, mittels denen die Sicherheitstür halt- und tragbar ist.

Wenn die Sicherheitstür auf ihrer Innenseite eine Isoliervorrichtung und Schutzbleche aufweist, mittels denen mechanische Bauteile, Lager und der Fluidzylinder geschützt sind, kann verhindert werden, dass aufgrund von Hitze und Verunreinigungen Störungen im Betrieb der Sicherheitstür auftreten.

Wenn die Sicherheitstür sanft geöffnet und geschlossen werden soll, ist es vorteilhaft, wenn sie auf ihrer Innenseite von der Isoliervorrichtung und den Schutzblechen abgedeckte Führungs-, Feder- und Dämpfglieder aufweist, mittels denen ein mechanisch schonendes Öffnen und Schließen der Sicherheitstür realisierbar ist.

Ein langfristig sicherer und zuverlässiger Betrieb der erfindungsgemäßen Sicherheitstür kann realisiert werden, wenn der Fluidzylinder der Sicherheitstür ein Reduktionsglied aufweist, mittels dem die Öffnungs- und Schließbewegung der Sicherheitstür regulier- und einstellbar ist.

Im Folgenden wird die Erfindung anhand einer Ausführungsform unter Bezugnahme auf die Zeichnung näher erläutert.

Es zeigen:
- Figur 1: eine perspektivische Darstellung eines für die vorliegende Erfindung wesentlichen Bereichs einer Behälterglasmaschine, wobei an zwei Behälterglasmaschinenstationen eine Ausführungsform einer erfindungsgemäßen Sicherheitstür im geschlossenen und an einer Behälterglasmaschinenstation die betreffende Ausführungsform der erfindungsgemäßen Sicherheitstür im geöffneten Zustand dargestellt ist;
- Figur 2: eine perspektivische Darstellung der in Figur 1 gezeigten Ausführungsform der erfindungsgemäßen Sicherheitstür im geschlossenen Zustand;
- Figur 3: eine Seitenansicht der in Figur 2 gezeigten Ausführungsform der erfindungsgemäßen Sicherheitstür im geschlossenen Zustand;
- Figur 4: die in den Figuren 1 bis 3 gezeigte Ausführungsform der erfindungsgemäßen Sicherheitstür in perspektivischer Darstellung im geöffneten Zustand; und
- Figur 5: eine Seitenansicht der in Figur 4 im geöffneten Zustand gezeigten Ausführungsform der erfindungsgemäßen Sicherheitstür.

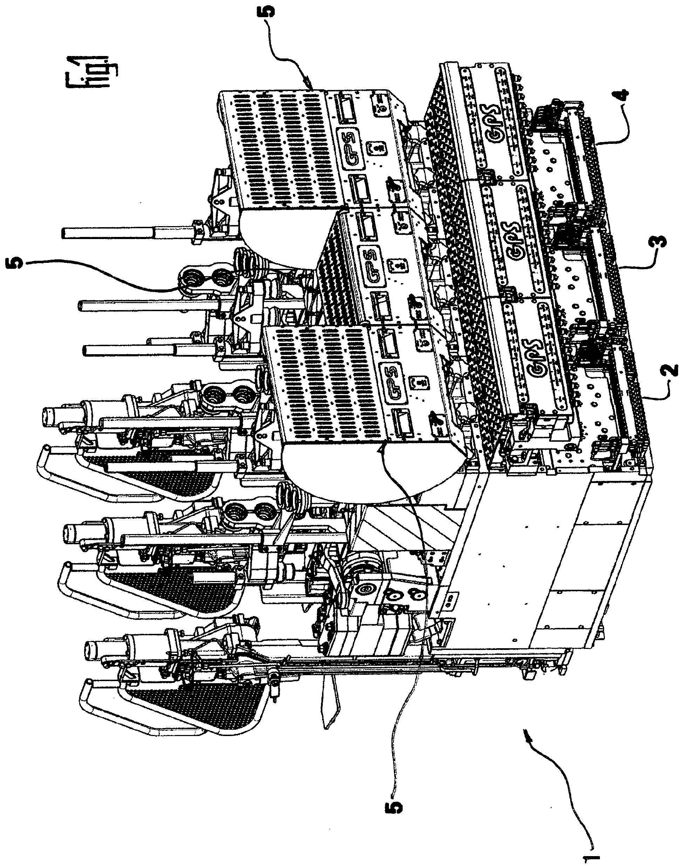

Ein in Figur 1 gezeigter, für die vorliegende Erfindung wesentlicher Bereich einer Behälterglasmaschine 1 ist an der Vorformseite der drei in Figur 1 gezeigten Behälterglasmaschinenstationen 2, 3, 4 jeweils mit einer Sicherheitstür 5 versehen.

Im dargestellten Ausführungsbeispiel ist die Sicherheitstür 5 vollständig in die Vorformseite der jeweiligen Behälterglasmaschinenstation 2, 3, 4 der Behälterglasmaschine 1 integriert und hinsichtlich ihrer baulichen Abmessungen entspricht sie einer üblichen auf der Vorformseite vorgesehenen Standardabdeckung.

Bei der Darstellung in Figur 1 sind die rechte und die linke Sicherheitstür 5 in ihrem geschlossenen Zustand, die mittlere Sicherheitstür 5 in ihrem geöffneten Zustand gezeigt.

In ihrem geschlossenen Zustand schützt die Sicherheitstür 5 einen Maschinenbediener vor aus der Behälterglasmaschinenstation 2, 3, 4 herausfallenden Teilen; darüber hinaus wird im geschlossenen Zustand durch die Sicherheitstür 5 verhindert, dass in die laufende Behälterglasmaschinenstation 2, 3, 4 hineingefasst wird.

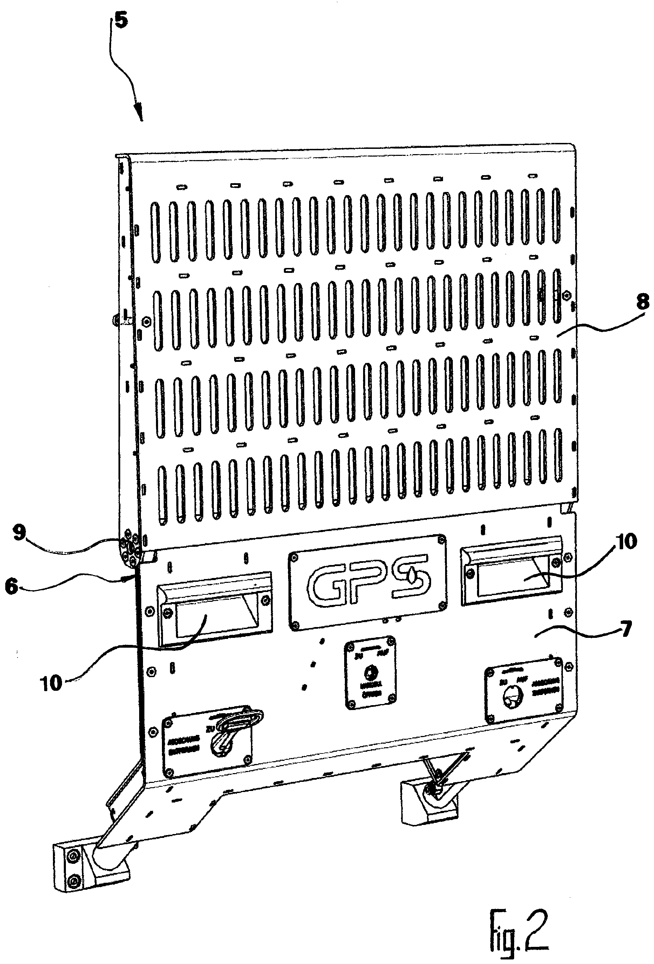

Wie am besten aus einer Zusammenschau der Figuren 2 und 4 bzw. 3 und 5 hervorgeht, hat die Sicherheitstür 5 ein Türblatt 6, das aus einem Unterabschnitt 7 und einem in Bezug auf diesen Unterabschnitt 7 schwenkbaren Oberabschnitt 8 ausgebildet ist.

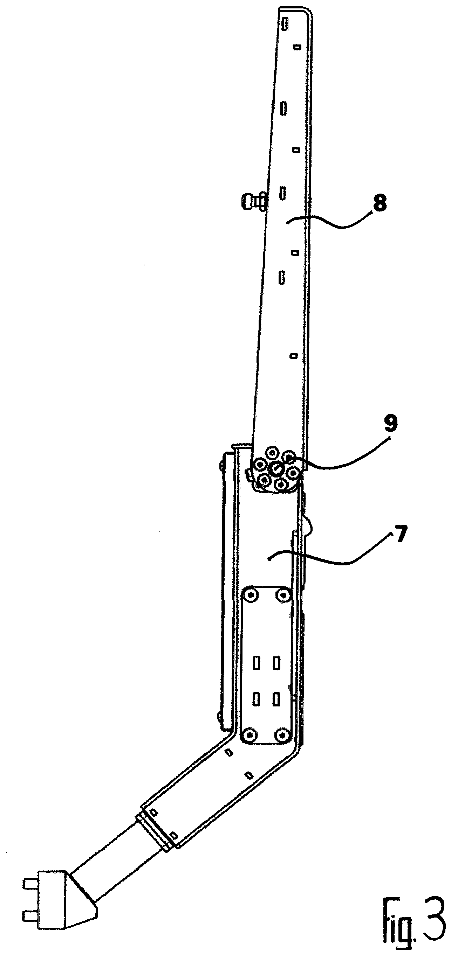

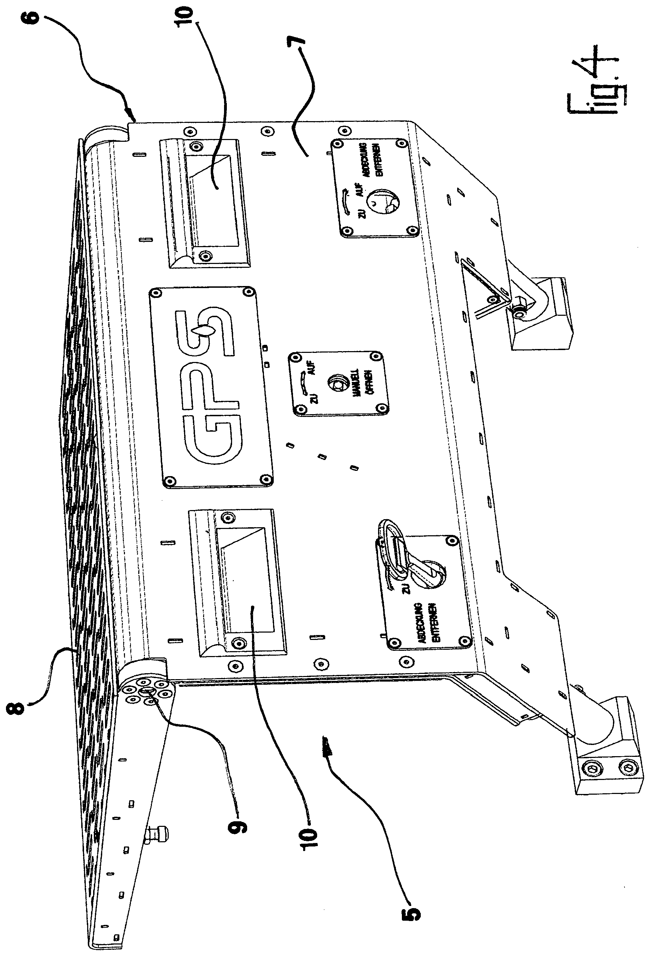

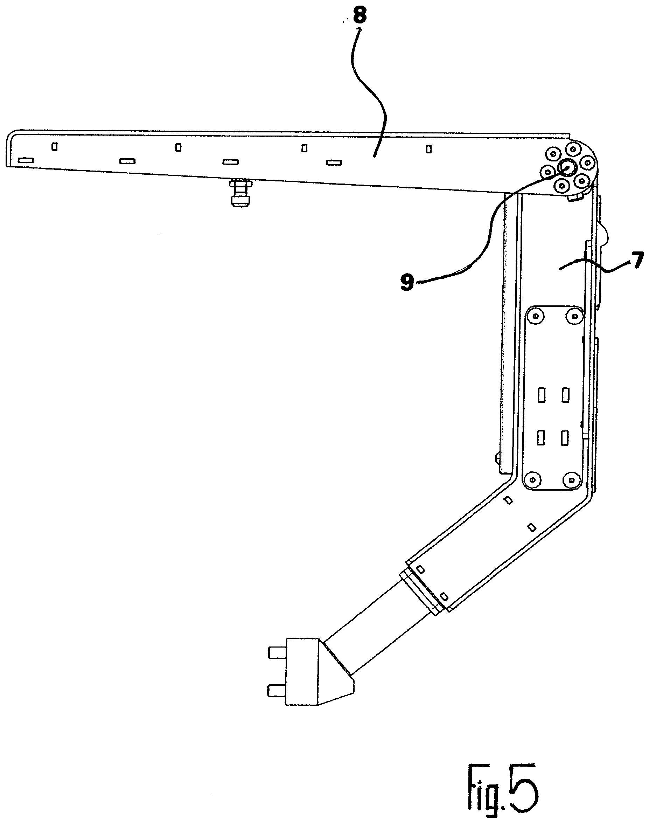

Zwischen dem in Bezug auf die Behälterglasmaschinenstation 2, 3, 4 fixiert angeordneten Unterabschnitt 7 des Türblatts 6 und dem Oberabschnitt 8 des Türblatts 6 ist eine Schwenkachse 9 angeordnet, um die herum der Oberabschnitt 8 in Bezug auf den Unterabschnitt 7 aus der in Figur 1 rechts und links und in den Figuren 2 und 3 dargestellten geschlossenen Zustand der Sicherheitstür 5 in den in Figur 1 mittig und in den Figuren 4 und 5 dargestellten geöffneten Zustand der Sicherheitstür 5 verstellbar ist. Hierzu wird der Oberabschnitt 8 um 90 Grad um die Schwenkachse 9 geschwenkt, und zwar entweder aus der geschlossenen in die geöffnete oder aus der geöffneten in die geschlossene Stellung.

Im an der Behälterglasmaschinenstation 2, 3, 4 montierten Zustand der Sicherheitstür 5 ist deren Unterabschnitt 7 fest mit der Behälterglasmaschinenstation 2, 3, 4 verbunden.

Die Schwenkachse 9 zwischen dem Unterabschnitt 7 und dem Oberabschnitt 8 verläuft in horizontaler Richtung und ist damit rechtwinklig zur Vorformachse der Behälterglasmaschinenstationen 2, 3, 4 angeordnet.

Zur Verstellung des Oberabschnitts 8 des Türblatts 6 der Sicherheitstür 5 aus dessen geschlossener in dessen offene bzw. aus dessen offener in dessen geschlossene Stellung dient ein Fluidzylinder, der üblicherweise als Pneumatikzylinder ausgebildet ist. Der Fluid- bzw. Pneumatikzylinder ist an der Innenseite der Sicherheitstür 5 angeordnet bzw. dort integriert.

Um sicherzustellen, dass ein Betrieb des Fluidzylinders zwecks Öffnung der Sicherheitstür 5 nur dann möglich ist, wenn die Vorformseite der betreffenden Behälterglasmaschinenstation 2, 3, 4 außer Betrieb gesetzt ist, ist dem Fluid- bzw. Pneumatikzylinder eine Steuereinheit zugeordnet, die an eine Steuervorrichtung der Behälterglasmaschine 1 angeschlossen ist. Eine Inbetriebnahme des Fluid- bzw. Pneumatikzylinders zwecks Öffnung der Sicherheitstür 5 wird seitens der Steuervorrichtung der Behälterglasmaschine 1 bzw. seitens der Steuereinheit nur dann zugelassen, wenn die Vorformseite der Behälterglasmaschinenstation 2, 3, 4 nicht in Betrieb ist.

Am Fluid- bzw. Pneumatikzylinder ist eine Entriegelung vorgesehen, mittels der der Fluid- bzw. Pneumatikzylinder manuell entriegelbar ist. Hierdurch wird sichergestellt, dass ein Öffnen der Sicherheitstür 5 auch dann möglich bleibt, wenn ein Druckfluidausfall eintritt.

Die Sicherheitstür 5 bzw. der Unterabschnitt 7 ihres Türblatts 6 ist im dargestellten Ausführungsbeispiel als Quick Change- oder als LOTO(Lock out Take Out)-Tür ausgestaltet und entsprechend mit einem für die Montage bzw. die Demontage vorgesehenen Spezialschlüssel innerhalb von Sekunden entriegel- und demontierbar.

Zum Halten und zum Tragen bzw. Wegtragen der demontierten Sicherheitstür 5 sind im dargestellten Ausführungsbeispiel am Unterabschnitt 7 des Türblatts 6 zwei Handgriffe 10 vorgesehen. Die üblicherweise je nach technischer Ausführung zwölf bis fünfzehn Kilogramm wiegende Sicherheitstür kann mittels dieser Handgriffe 10 in einfacher Weise transportiert werden.

An der Innenseite weist die Sicherheitstür 5 eine Isoliervorrichtung und Schutzbleche auf, mittels denen empfindliche mechanische Bauteile, Lager und der Fluidzylinder gegen die im Betrieb der Behälterglasmaschinenstation 2, 3, 4 auftretenden schädlichen Umgebungseinflüsse gesichert sind.

Um Beschädigungen des Fluid- bzw. Pneumatikzylinders sowie mit diesem verbundener Bauteile der Sicherheitstür 5 bei deren Öffnen und Schließen zu vermeiden, sind auf der Innenseite der Sicherheitstür 5 Führungs-, Feder- und Dämpfglieder vorgesehen.

Der Fluidzylinder hat ein Reduktionsglied, um zu hohe mechanische Beanspruchungen beim Öffnen und Schließen der Sicherheitstür 5 bzw. beim Schwenken des Oberabschnitts 8 des Türblatts 6 zu verhindern.

## Patentansprüche

1. Sicherheitstür für die Vorformseite einer Behälterglasmaschinenstation (2, 3, 4), mit einem Türblatt (6), mittels dem im geschlossenen Zustand der Sicherheitstür (5) die Vorformseite der Behälterglasmaschinenstation (2, 3, 4) gesichert ist, **dadurch gekennzeichnet, dass** das Türblatt (6) der Sicherheitstür (5) zweiteilig mit einem Oberabschnitt (8) und einem Unterabschnitt (7) ausgebildet ist und eine Schwenkachse (9) aufweist, die zwischen dem Unterabschnitt (7) und dem Oberabschnitt (8) des Türblatts (6) angeordnet ist und um die der Oberabschnitt (8) zum Öffnen und Schließen der Sicherheitstür (5) aus einer vertikalen in eine horizontale bzw. aus einer horizontalen in eine vertikale Stellung schwenkbar ist.

2. Sicherheitstür nach Anspruch 1, mit einem Fluidzylinder, vorzugsweise einem Pneumatikzylinder, der an einer Innenseite der Sicherheitstür (5) integriert ist und mittels dem der Oberabschnitt (8) des Türblatts (6) der Sicherheitstür (5) aus seiner vertikalen in seine horizontale Stellung und umgekehrt verstellbar ist.

3. Sicherheitstür nach Anspruch 1 oder 2, bei der die Schwenkachse (9), um die der Oberabschnitt (8) des Türblatts (6) in Bezug auf dessen Unterabschnitt (7) verschwenkbar ist, rechtwinklig zur Vorformachse der Behälterglasmaschinenstation (2, 3, 4) angeordnet ist.

4. Sicherheitstür nach Anspruch 2 oder 3, deren Fluidzylinder eine Steuereinheit aufweist, die an eine Steuervorrichtung der Behälterglasmaschine (1) angeschlossen ist und eine Verstellung des Oberabschnitts (8) des Türblatts (6) in die Offenstellung der Sicherheitstür (5) nur durchführt, wenn die Vorformseite der Behälterglasmaschinenstation (2, 3, 4) außer Betrieb ist.

5. Sicherheitstür nach Anspruch 4, deren mittels der Steuereinheit verriegelter Fluidzylinder manuell entriegelbar ist.

6. Sicherheitstür nach einem der Ansprüche 1 bis 5, die in eine übliche Vorformabdeckung integriert bzw. Bestandteil derselben ist.

7. Sicherheitstür nach einem der Ansprüche 1 bis 6, die mittels eines speziellen Schlüssels schnell, z.B. innerhalb von einigen Sekunden, entriegel- und demontierbar ist.

8. Sicherheitstür nach einem der Ansprüche 1 bis 7, mit zwei Handgriffen (10), mittels denen die Sicherheitstür (5) halt- und tragbar ist.

9. Sicherheitstür nach einem der Ansprüche 2 bis 8, die auf ihrer Innenseite eine Isoliervorrichtung und Schutzbleche aufweist, mittels denen mechanische Bauteile, Lager und der Fluidzylinder geschützt sind.

10. Sicherheitstür nach einem der Ansprüche 1 bis 9, die auf ihrer Innenseite von der Isoliervorrichtung und den Schutzblechen abgedeckte Führungs-, Feder- und Dämpfglieder aufweist, mittels denen ein mechanisch schonendes Öffnen und Schließen der Sicherheitstür (5) realisierbar ist.

11. Sicherheitstür nach einem der Ansprüche 2 bis 10, deren Fluidzylinder ein Reduktionsglied aufweist, mittels dem die Öffnungs- und Schließbewegung der Sicherheitstür (5) regulier- und einstellbar ist.
